# EUROPEAN PATENT APPLICATION

(11) **EP 4 443 613 A2**
(43) Date of publication of application: **09.10.2024**
(21) Application number: 24168763.1
(22) Date of filing: 05.04.2024
(51) Int. Cl.: H01M 50/105, B32B 7/12, B32B 15/20, H01M 50/119, H01M 50/121, H01M 50/124, H01M 50/126, H01M 50/129, H01M 50/133

(54) **CELL POUCH FILM HAVING IMPROVED FORMABILITY AND METHOD FOR PREPARING THE SAME**

(30) Priority: 06.04.2023 KR 20230045371
(71) Applicant: Youlchon Chemical Co., Ltd., Seoul 07057 (KR)
(72) Inventor: SONG, Nok Jung, 07057 Seoul (KR); HAN, Hee Sik, 15430 Ansan-si (KR); KIM, Huihun, 15430 Ansan-si (KR); SHIN, Sung Chul, 15430 Ansan-si (KR); SONG, Moonkyu, 15430 Ansan-si (KR)
(74) Representative: V.O.

(57) **Abstract**

Disclosed are a cell pouch film having improved formability, a method for preparing the same, and a secondary battery using the same. The cell pouch film can suppress the occurrence of cracks in edge portion generated during deep molding, allowing the edge portion to be formed thickly, thereby exhibiting excellent deep molding properties. Since such a cell pouch film can improve the energy density of a secondary battery, it is particularly useful as a medium to large-sized cell pouch for electric vehicles, energy storage devices, and the like.

## Description

### Technical Field

The present specification relates to a cell pouch film having improved formability, a method for preparing the same, a cell pouch and a secondary battery using the same and a method of preparing them, and more particularly, to a cell pouch film particularly suitable for medium to large-sized battery, which can be thickly formed without cracks in the edge portion generated during deep molding of secondary battery pouch films, thereby exhibiting excellent deep molding properties, a method for preparing the same, a cell pouch and a secondary battery using the same and a method of preparing them.

[National Research and Development Project Supporting This Invention]

[Project Unique Number] 1415185612

[Project Number] 20022450

[Name of the Ministry] Ministry of Trade, Industry and Energy

[Name of the Project Management (Specialized) Institution] Korea Institute of Industrial Technology Evaluation and Management

[Research Project Name] Material/Parts Package Type (Top Company)

[Research Project Title] Development of Next-Generation Secondary Battery Pouch Capable for Realizing More Than Double High Adhesion Strength at 60°C

[Contribution Ratio] 1/1

[Name of the Research Performing Institution] Youlchon Chemical Co., Ltd.

[Research Period] 2023.01.01 ~ 2023.12.31

### Background Art

Lithium secondary batteries (LiB) are applied to many applications based on various advantages such as their high energy density and excellent output.

The cell pouch film is a multilayer film for packaging that surrounds an electrode group and an electrolyte of a cell such as a secondary battery, and is a key component material that determines stability, life characteristics, and operational durability of a battery, and requires mechanical flexibility and strength, high oxygen/water vapor barrier properties, high thermal sealing strength, chemical resistance to the electrolyte, electrical insulation, and high temperature stability, and so on are required.

As the application fields of lithium secondary batteries are expanded from small-sized application to medium to large-sized application for automobiles or ESSs, a cell pouch film is also required to be suitable for a medium to large-sized cell pouch film, and particularly, with high safety and deep molding properties.

Regarding this, the cell size and the cell pouch molding depth of the automotive lithium secondary battery (LiB) are factors that greatly affect the secondary battery capacity. In the case of the cell size, it is required to have a larger size and higher formability compared to that of regular small-sized. As the molding depth of the cell determines its capacity, it can be said that deep molding is an essential condition for reaching to 700 Wh/L, which is the required capacity of the next-generation secondary battery as the depth is formed deeper.

On the other hand, the cell pouch is generally prepared as follows: a first process of surface-treating one side surface of a metal layer; a second process of surfaces-treating the other side surface of the metal layer; a third process of laminating an outer layer on one side; and a fourth process of laminating a sealant layer on the other side surface. Each process involves a series of steps such as coating, drying, and winding, etc. However, this method increases the likelihood of process defects and running losses during the transfer of the raw material, necessitating improvements.

### Disclosure of Invention

### Technical Problem

In the exemplary embodiments of the present invention, in one aspect, it is intended to provide a cell pouch film capable of suppressing the occurrence of cracks in the edge portion of the cell pouch film generated during deep molding, allowing the edge portion to be formed thickly, and a secondary battery packaged with the same.

In the exemplary embodiments of the present invention, in one aspect, it is intended to provide a cell pouch film having excellent deep molding properties thereof and a secondary battery packaged with the cell pouch film.

### Solution to Problem

In exemplary embodiments of the present invention, there is provided a cell pouch film (a cell pouch film according to claim 1), in which at least an outer layer, a barrier layer, and a sealant layer are structured in that order, and a peeled surface on the side of the barrier layer after peeling between the outer layer and the barrier layer of the cell pouch film has a surface roughness Ra of 1.5 µm or less.

In exemplary embodiments of the present invention, there is provided a cell pouch film (a cell pouch film according to claim 2), in which at least an outer layer, a barrier layer, and a sealant layer are structured in that order, and the outer layer in which nylon and polyethylene terephthalate (PET) are laminated has an a elastic modulus in the MD direction of 2450 N/mm² or less and the elastic modulus in the TD direction of 2400 N/mm² or less.

In one exemplary embodiment, the cell pouch film of the claim 1 and/or the cell pouch film of claim 2 as described above may be the cell pouch film (the cell pouch film according to claim 3) in which the said barrier layer has a thickness of 60 µm before molding, and an edge portion metal layer of the cell pouch film has a residual thickness of 34 µm or more as measured as follows.

### [Measurement of Residual Thickness of Edge Portion Metal Layer]

A cell pouch film of 240 mm (MD)×266 mm (TD) is molded through a molding machine to have 12 mm depth, and the edge portion is cut with a cross-sectional cutting machine to measure the maximum thickness of the cross-section of the metal layer in the cell pouch film through SEM.

In one exemplary embodiment, the above-described cell pouch film (cell pouch film according to any one of claims 1 to 3) may be a cell pouch film (cell pouch film according to claim 4) having a maximum molding depth of 16 mm or more as measured as follows.

### [Measurement of Formability]

A cell pouch film is manufactured in 240 mm (MD) × 266 mm (TD) specimens and the formability is measured using a molding machine. The results of the molding, i.e., the formability are evaluated by measuring the maximum (max) molding depth of the pouches formed without cracks in all 10 times out of 10 times of measurement.

In one exemplary embodiment of the present invention, there is provided a method (a method for preparing the cell pouch film according to claim 5) for preparing the above-described cell pouch film (the cell pouch film according to any one of claims 1 to 4), the method comprising: surface-treating both surfaces of the metal raw material contained in the barrier layer; drying the said surface-treated metal raw material on both sides; coating the outer surface adhesive layer by applying adhesive to one side surface of the said surface-treated metal raw material, to form the outer surface adhesive layer; and laminating the outer layer raw material to the top of the said outer surface adhesive layer; wherein the drying temperature of the metal raw material after the said surface treatment on both sides is 160° C or higher.

In one exemplary embodiment, the said method (the method for preparing the cell pouch film according to claim 5) may be the method (the method for preparing the cell pouch film according to claim 6) comprising: primarily laminating nylon and polyethylene terephthalate (PET) films, and then laminating the said laminated nylon and polyethylene terephthalate (PET) films with the barrier layer.

In one exemplary embodiment, the said method (the method for preparing the cell pouch film according to claim 5 or claim 6) may be the method (the method for preparing the cell pouch film according to claim 7), in which, in the said both-sided surface treatment step, surface treatment of the other side of the said metal raw material is sequentially performed without the drying step immediately after the surface treatment of the one side of the metal raw material.

In one exemplary embodiment, the said method (the method for preparing the cell pouch film according to any one of claims 5 to 7) may be the method (the method for preparing the cell pouch film according to claim 8), in which, in the said drying step, the metal raw material of which said both-sided surfaces are surface-treated is dried in a floating manner.

In one exemplary embodiment, the said method (the method for preparing the cell pouch film according to any one of claims 5 to 8) may be the method (the method for preparing the cell pouch film according to claim 9) wherein the said both-sided surface treatment step comprises: performing a first coating on one side of the metal raw material by applying the water-based and solvent-based coating solution using a combination of direct coating and Reverse Kiss Coating (RKC) methods, and performing a second coating on the other one side of the metal raw material by applying a coating solution using RKC and Film up/down coating methods.

In one exemplary embodiment, the said method (the method for preparing the cell pouch film according to any one of claims 5 to 9) may be the method (the method for preparing the cell pouch film according to claim 10) comprising: performing the first winding after the said outer layer lamination step; forming an inner surface adhesive layer on the other one side where the outer layer is not laminated in the surface-treated metal raw material after the said first winding; and laminating a sealant layer raw material to the bottom of the said inner surface adhesive layer; and performing the second winding after the said sealant layer raw material lamination.

In exemplary embodiments of the present invention, there is also provided a cell pouch made of the above-described cell pouch film (cell pouch film according to any one of claims 1 to 4) or a secondary battery (a secondary battery according to claim 11) packaged using the same.

In addition, in the exemplary embodiments of the present invention, there is provided a method for preparing a secondary battery (a method according to claim 12), comprising: packaging the secondary battery with the above-described cell pouch film (the cell pouch film according to any one of claims 1 to 4).

### Advantageous Effects of Invention

In the exemplary embodiments of the present invention, it is possible to suppress the occurrence of cracks in edge portion generated during deep molding of the secondary battery pouch film, allowing the edge portion to be formed thickly, thereby exhibiting excellent deep molding properties. Since such a cell pouch film can improve the energy density of a secondary battery, it is particularly useful as a medium or large cell pouch for electric vehicles, energy storage devices, and so on.

### Brief Description of Drawings

The above and other aspects, features and advantages of the disclosed exemplary embodiments will be more apparent from the following detailed description taken in conjunction with the accompanying drawings in which:
Fig. 1 is a diagram schematically showing a cross-section of the cell pouch film of exemplary embodiments of the present invention.
Fig. 2 is a schematic view of the apparatus for manufacturing the cell pouch film of exemplary embodiments of the present invention.

### Mode for the Invention

Exemplary embodiments are described more fully hereinafter. The invention may, however, be embodied in many different forms and should not be construed as limited to the exemplary embodiments set forth herein. Rather, these exemplary embodiments are provided so that this disclosure will be thorough and complete, and will fully convey the scope of the invention to those skilled in the art. In the description, details of features and techniques may be omitted to more clearly disclose exemplary embodiments.

### Term Definition

In the present specification, the singular forms "a," "an," and "the" may include the plural forms, unless the context clearly dictates otherwise. In this application, the terms "comprise" or "have" and the like are intended to designate the presence of a feature, number, step, operation, component, part, or combination thereof described in the specification, and do not preclude the presence or addition possibility of one or more other features or numbers, steps, operations, components, parts, or combinations thereof.

In the present specification, expressions such as first and second are used to refer to configurations separately from each other, rather than to a specific order, unless otherwise stated.

In the present specification, forming 'on' a specific layer includes not only forming directly on that layer, but also forming after interposing an additional other layer.

In the present specification, the term "cell" means a battery, and it is the broadest meaning including all of various batteries such as a secondary battery such as a lithium-ion battery and a lithium-polymer battery, or a portable storage battery.

In the present specification the term "MD" refers to machine direction.

In the present specification the term "TD" refers to transverse direction.

In the present specification, a "cell pouch" or a " cell pouch film" is one in which cell components such as a positive electrode, a negative electrode, and a separator are impregnated in the electrolyte and housed, and has the broadest meaning including all those in which a film having a stacked structure for gas barrier properties, bending properties, electrolyte resistance, thermal adhesion, and so on is processed into a bag shape, a box shape, or the like to house the said cell components.

In the present specification, the final structure means the final layer structure of the cell pouch film. This final structure may differ slightly depending on the various preparing process types.

For example, the final structure may consist of an outer cover substrate (or an outer layer), a first adhesive layer, an outer surface-treated layer, a reference substrate (or a barrier layer), an inner surface-treated layer, a second adhesive layer and an inner cover substrate (or a sealant layer). Alternatively, the final structure may consist of an outer cover substrate (or an outer layer), a first adhesive layer, an outer surface-treated layer, a reference substrate (or a barrier layer), an inner surface-treated layer, an extrusion coating layer, and an inner cover substrate (or a sealant layer). Alternatively, the final structure may consist of an outer cover substrate (or an outer layer), a first adhesive layer, an outer surface-treated layer, a reference substrate (or a barrier layer), an inner surface-treated layer, a second adhesive layer, an extrusion coating layer, and an inner cover substrate (or a sealant layer).

In the present specification, the intermediate structure is a structure formed in the middle of the preparing process of the cell pouch film, and various cell pouch intermediate structures may occur depending on the preparing process.

For example, there may be a first intermediate structure consisting of an outer cover substrate (or an outer layer), a first adhesive layer (or an outer surface adhesive layer), an outer surface-treated layer, a reference substrate (or a barrier layer), the inner surface-treated layer, and a second adhesive layer (or an inner adhesive layer). Alternatively, there may be a second intermediate structure consisting of an outer cover substrate (or an outer layer), a first adhesive layer (or an outer surface adhesive layer), an outer surface-treated layer, a reference substrate (or a barrier layer), and an inner surface-treated layer.

In the present specification, one in-line process means a roll-to-roll process in which the raw material performs a single run between an unwinder and a rewinder (winding roll).

In the present specification, a single winding (rewinding) does not mean that the winding roll rotates only once (the winding roll can obviously rotate multiple times), but rather it means that the film completes its first run by being wound around the winding roll. Therefore, winding (rewinding) twice means completing the first run during the preparing process, and then starting the run again, and completing the second run.

In the present specification, a raw material may mean a barrier layer or a metal layer material provided in the preparing process.

In the present specification, a functional raw material may mean a resin raw material forming a sealant layer and/or an outer layer.

In the present specification, an edge portion means a corner portion of the molding portion. For example, during molding, the pouch is manufactured in the form of a cuboid cup having a size of 185 mm (X axis)×85 mm (Y axis)×12 mm (Z axis). The edge portion means a portion up to 0.5 mmx0.5 mm× 0.5 mm at the end of the corner portion of this cuboid cup.

In the present specification, the peeled surface on the side of barrier layer does not mean the metal surface itself that is the material of the barrier layers, but means the surface (peeled surface) on the side of the barrier layer where some material peeled off from the outer layer film side remains after peeling in the case of peeling the outer layer and the barrier layer of the cell pouch film. Therefore, the surface roughness of the peeled surface on the side of the barrier layer means not the surface roughness of the metal surface itself, which is the material of the barrier layers, but the surface roughness of the peeled surface on the side of the barrier layer in which the material (residues) peeled off from the outer layer film and remaining on the side of the barrier layer exists. The surface roughness of the peeled surface caused by that residue is different from that of the surface of the metal layer itself.

### Description of Exemplary Embodiments

Exemplary embodiments of the present invention are described below.

It is difficult to form the edge portion thick because cracks are likely to occur in the edge portion when the cell pouch film is deeply molded. That is, how thick the edge portion may be formed may be a measure of evaluating high formability. As will be described later, how thick an edge portion may be formed may be evaluated as the residual thickness of the barrier layer at the edge portion after molding (the post-molding thickness).

The present inventors confirmed that when the outer layer and the barrier layer of the cell pouch film are peeled off, the surface roughness of the peeled surface and/or the elastic modulus in the MD direction and the elastic moduli in the TD direction of the outer layer obtained by laminating nylon and PET in the cell pouch film are associated with the thickness of the edge portion during deep molding and the resulting high-formability, and repeated research to reach the present invention.

The peeling may be performed as follows.

### [Performance of Peeling]

A 2.5 cm (TD)×15 cm (MD) pouch film is impregnated into the container containing the electrolyte and sealed, and then the sealed container is left in the oven at 85° C for 1 day, and then the pouch film impregnated into that electrolyte is taken out and cut into size of 1.5 cm (TD)× 15 cm (MD) to prepare a sample. Weak cuts are made only on the outer layer without damage to the barrier layer, then it is pulled with the universal testing machine (UTM) to peel off the metal layer and part of the peeled sealant layer, then that sample is flatly attached to a slide glass using both-sided tape, and again used the universal testing machine (UTM) to peel off the sample by holding both ends of that sample so that the metal layer and the peeled sealant layer are at 180 degrees and pulling them to peel off by about 30 mm or more (50 mm/min in speed).

Specifically, in the exemplary embodiments of the present invention, the cell pouch film has a surface roughness Ra of 1.5 µm or less on the side of the barrier layer after peeling between the outer layer and the barrier layer of the cell pouch film. The surface roughness may be measured according to the following method.

### [Measurement of Surface Roughness]

A metal layer (e.g. aluminum layer) side of a peeled sealant layer is cut to a size of 1×1 cm2 and attached flat to a slide glass using both-sided tape. Photographs of the surface curvature are taken using a surface roughness measurement device (e.g. NV-2200 3D profiler, manufactured by Nano System). Ra in the histogram column is measured for the obtained data using an analysis program (e.g. NanoMap, manufactured by Nano system).

In a non-limiting example, the said surface roughness Ra may be 0.82-1.5 µm or 0.82-1.13 µm. In a non-limiting example, the said surface roughness Ra may be 1.49 µm or less, 1.48 µm or less, 1.47 µm or less, 1.46 µm or less, 1.45 µm or less, 1.44 µm or less, 1.43 µm or less, 1.42 µm or less, 1.41 µm or less, 1.40 µm or less, 1.39 µm or less, 1.38 µm or less , 1.37 µm or less, 1.36 µm or less, 1.35 µm or less, 1.34 µm or less, 1.33 µm or less, 1.32 µm or less, 1.31 µm or less, 1.30 µm or less, 1.29 µm or less, 1.28 µm or less, 1.27 µm or less, 1.26 µm or less, 1.25 µm or less, 1.24 µm or less, 1.23 µm or less, 1.22 µm or less, 1.21 µm or less, 1.20 µm or less, 1.19 µm or less, 1.18 µm or less, 1.17 µm or less, 1.16 µm or less, 1.15 µm or less, 1.14 µm or less, 1.13 µm or less, 1.12 µm or less, 1.11 µm or less, 1.10 µm or less, 1.09 µm or less, 1.08 µm or less, 1.07 µm or less, 1.06 µm or less, 1.05 µm or less, 1.04 µm or less, 1.03 µm or less, 1.02 µm or less, 1.01 µm or less, 1.0 µm or less, 0.99 µm or less, 0.98 µm or less, 0.97 µm or less, 0.96 µm or less, 0.95 µm or less, 0.94 µm or less, 0.93 µm or less, 0.92 µm or less, 0.91 µm or less, 0.90 µm or less, 0.89 µm or less, 0.88 µm or less, 0.87 µm or less, 0.86 µm or less, 0.85 µm or less, 0.84 µm or less, 0.83 µm or less, or 0.82 µm.

When the surface roughness Ra on the side of the barrier layer after peeling between the outer layer and the barrier layers of the cell pouch film exceeds 1.5 µm, the aluminum residual thickness at the edge portion after 12 mm molding is reduced, and the formability also becomes poor, as can be seen in the experimental example described later.

The surface roughness on the side of the said barrier layer can be adjusted by the preparing process described below, and it is thought to be affected by the drying temperature of the drying chamber after the both-sided surface treatment during the 1P3C process and/or whether or not the lamination of nylon and PET is separately performed, the MD and TD elastic modulus of nylon/PET, and so on.

In one exemplary embodiment, it is preferable that the outer layer obtained by laminating nylon and PET in the cell pouch film has an elastic modulus in the MD direction of 2450 N/mm² or less and an elastic modulus in the TD direction of 2400 N/mm² or less.

The method for evaluating the said elastic modulus in the MD direction and the TD direction is as follows.

That is, the said cell pouch film is manufactured at 150 mm×1.5 mm through a specimen cutter (manufactured two MD and TD specimens), and then Ny/PET is peeled from the pouch by hand. The elastic modulus is then evaluated with a universal testing machine UTM. The conditions for evaluating the elastic modulus include a speed of 50 mm/min, a grip gap of 50mm, and the evaluation is conducted at a room temperature of 25° C and a humidity of 30%. The elastic modulus evaluation is determined by using the slope of the elastic modulus section in the SS curve.

In a non-limiting example, the elastic modulus in the MD direction of the outer layer obtained by laminating nylon and PET may be 2450 N/mm² or less, 2400 N/mm² or less, 2350 N/mm² or less, 2300 N/mm² or less, 2250 N/mm² or less, 2200 N/mm² or less, 2150 N/mm² or less, 2100 N/mm² or less, 2050 N/mm² or less. Alternatively, it may be 2000 N/mm² or more, 2050 N/mm² or more, 2100 N/mm² or more, 2150 N/mm² or more, 2200 N/mm² or more 2250 N/mm² or more, 2300 N/mm² or more, 2350 N/mm² or more, 2400 N/mm² or more. When the elastic modulus in the MD direction is lower than the said range, the resistance to external impact may be reduced.

When the elastic modulus in the MD direction of the outer layer obtained by laminating nylon and PET exceeds 2450 N/mm², the formability may become poor, as can be seen from the experimental examples described later.

In a non-limiting example, the elastic modulus in the TD direction of the outer layer obtained by laminating nylon and PET may be 2400 N/mm² or less, 2350 N/mm² or less, 2300 N/mm² or less, 2250 N/mm² or less, 2200 N/mm² or less, 2150 N/mm² or less, 2100 N/mm² or less, 2050 N/mm² or less. Alternatively, it may be 2000 N/mm² or more, 2050 N/mm² or more, 2100 N/mm² or more, 2150 N/mm² or more, 2200 N/mm² or more 2250 N/mm² or more, 2300 N/mm² or more, 2350 N/mm² or more. When the elastic modulus in the MD direction is lower than the said range, the resistance to external impact may be reduced.

When the elastic modulus in the TD direction of the outer layer obtained by laminating nylon and PET exceeds 2400 N/mm², the formability may become poor, as can be seen from the experimental examples described later.

The elastic modulus in the MD direction and the elastic modulus in the TD direction of the outer layer obtained by laminating nylon and PET can also be adjusted by the preparing process, and even if the same material is used, it is thought to be affected by the drying temperature of the drying chamber after the both-sided surface treatment during the 1P3C process and/or whether or not the lamination of nylon and PET is separately performed, and so on.

In one exemplary embodiment, the residual thickness of the metal layer (the thickness of a metal layer before molding is 60 µm) at an edge portion of the cell pouch film as measured as follows may be 34 µm or more, 34.5 µm or more, 35 µm or more, 35.5 µm or more, 36 µm or more, 36.5 µm or more, 37 µm or more, 37.5 µm or more, 38 µm or more, 38.5 µm or more, 39 µm or more, 39.5 µm or more, for example it may be 34-40 µm.

### [Measurement of Residual Thickness of Edge Portion Metal Layer]

A cell pouch film of 240 mm (MD)×266 mm (TD) is molded to have 12 mm depth through a one-cup molding machine coated with chromium (Cr), and the edge portion is cut with a cross-sectional cutting machine to measure the maximum thickness of the cross-section of the metal layer in the pouch film, i.e., the residual thickness, through SEM. Here, the thickness of the metal layer in the pouch film before molding is 60 µm.

In one exemplary embodiment, the maximum molding depth of the cell pouch film as measured as follows may be 16 mm or more, 16.5 mm or more, 17 mm or more, 17.5 mm or more, 18 mm or more, 18.5 mm or more, 19 mm or more, 19.5 mm or more, 20 mm or more, 20.5 mm or more, 21 mm or more, 21.5 mm or more, or 22 mm.

### [Measurement of Formability]

A cell pouch film of 240 mm (MD)×266 mm (TD) is measured for formability through a one cup molding machine coated with chromium (Cr).

Measure 10 times to evaluate the maximum molding depth that was molded without cracking in all 10 times. The pressure during molding is fixed at 0.3 MPa, and the R value (the radius value of corner curvature) of the molding machine is 4R (4 mm). The forming size during molding is 90 mm×120 mm in width and is performed by single forming.

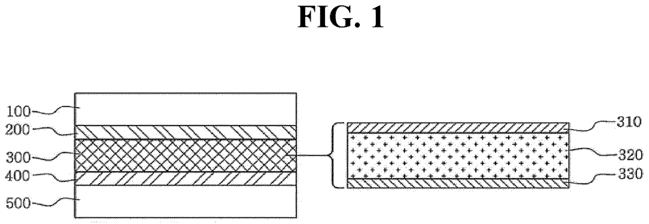

Meanwhile, referring to Fig. 1, the exemplary embodiments of the present invention may comprise a sealant layer 500; an inner surface adhesive layer 400 stacked on the said sealant layer 500; a barrier layer 300 stacked on the said inner surface adhesive layer 400; an outer surface adhesive layer 200 stacked on the said barrier layer 300; and an outer layer 100 formed on the said outer surface adhesive layer 200.

In one exemplary embodiment, the said outer layer 100 of the cell pouch film may be nylon, PET (polyethylene terephthalate), PBT (polybutylene terephthalate) and the like, and preferably, it may be composed of a mixed layer of nylon and PET (a laminating film of nylons and PET).

In one exemplary embodiment, in terms of formability, it is preferable that the thickness of the nylon film in the said outer layer 100 is 20 µm or more, and more preferably 25 µm or more, but when the thickness of the nylon film exceeds 30 µm, the breakdown voltage may decrease. Therefore, the preferred thickness of the nylon film may be 20 µm-30 µm, and preferably 25 µm-30 µm. If the nylon film is less than 20 µm, the formability may be poor.

In one exemplary embodiment, thinner PET film thickness and thicker nylon film thickness in the said outer layer 100 are advantageous for formability. However, thinner PET film thickness may be disadvantageous in terms of breakdown voltage, so from this perspective, the PET film is preferably 7 µm to 12 µm.

In one exemplary embodiment, the PET film may be used with MD and TD elongation of 90-110% or 95-105% or 100%, respectively. The said nylon film with MD elongation of 100-200%, 110-150%, or 110-125%, and TD elongation of 70-200%, 70-150%, or 74-138%, may be used. For example, in the nylon film, when MD elongation is about 125%, one with TD elongation of about 75%, may be used, or when MD elongation is about 110%, one with TD elongation of about 138%, may be used.

In exemplary embodiments, the said sealant layer 500 may include a thermal adhesive resin, that is, a sealing resin for thermal adhesive. Specifically, the said sealant layer may include one or more selected from the group consisting of polyolefin-based materials such as polypropylene (PP), polyethylene (PE) based materials, copolymers, terpolymers or derivatives thereof, and ethylene vinyl acetate (EVA). The said co-polymer or ter-polymer may include an ethylene/propylene copolymer or a terpolymer of ethylene/propylene/butadiene. As an example, the said sealant layer may have a thickness of 20 to 100 µm or 20 to 80 µm. The said sealant layer may be composed of a plurality of layers. The thickness of the polypropylene (CPP) layer as the said sealant layer 500 may be, for example, 20 to 80 µm.

As an example, the sealant layer 500 is composed of a polypropylene layer (PP), for example, a cast polypropyl (CPP) film, and the polypropylene (PP) layer and the barrier layer may be bonded by an adhesive coating layer and/or an extrusion coating (EC) layer of the polypropylene-based resin. In addition, the said sealant layer 500 itself may also be formed by extrusion. The said polypropylene layer (PP) may contain various additives (rubber, elastomer, slip agent, etc.) depending on the required properties.

In exemplary embodiments, the said outer surface adhesive layer 200 is an adhesive layer for bonding the said barrier layer 300 and the outer layer 100.

In exemplary embodiments, the said outer surface adhesive layer 200 may comprise one or more of an epoxy-based adhesive, a polyurethane-based adhesive, a phenolic resin-based adhesive, a polyolefin-based adhesive, and a polyester-based adhesive. As an example, the said outer surface adhesive layer may have a thickness of 0.5 µm to 10 µm.

In exemplary embodiments, the said inner surface adhesive layer 400 may be an adhesive coating layer or an extrusion coating layer for bonding the said barrier layer 300 and the sealant layer 500. Alternatively, as another example, the said inner surface adhesive layer may include an adhesive coating layer and an extrusion coating layer.

The said inner surface adhesive layer 400 may include one or more of an epoxy-based adhesive, a polyurethane-based adhesive, a phenolic resin-based adhesive, a polyolefin-based adhesive, and a polyester-based adhesive. As an example, the said inner surface adhesive layer 400 may have a thickness of 0.5 µm to 10 µm. In one example, the said extrusion resin layer may improve the bending property, adhesiveness, insulation property, and the like of the pouch. As one example, the said extrusion coating layer may include an olefin-based resin such as a polypropylene-based resin. As an example, the said extrusion coating layer may have a thickness of about 5 to 80 µm.

In exemplary embodiments, the said barrier layer 300 may include a metal layer or a surface-treated layer uniformly coated on both-sided surfaces of the said metal layer, respectively, and the said metal layer may be a metal thin film or a metal deposition layer. Examples of the said metal thin film include a metal foil. The said metal deposition layer may be formed by vacuum deposition of metal on a separate plastic film, for example, a film of polyethylene terephthalate (PET), polyethylene (PE), polypropylene (PP), or the like.

As an embodiment, the metal of the said metal layer is not limited as long as it has the above-described blocking performance, and examples thereof include one or more selected from the group consisting of aluminum (Al), iron (Fe), copper (Cu), nickel (Ni), tin (Sn), zinc (Zn), indium (In), and tungsten (W), or two or more alloys selected therefrom. Specifically, the said metal may include one or more selected from the group consisting of aluminum or an alloy thereof, titanium or an alloy thereof, tungsten or an alloy thereof, molybdenum or an alloy thereof, copper or an alloy thereof and stainless steel. More specifically, it may include aluminum. As an example, the said surface-treated layer may be a surface-treated layer made of phosphoric acid, chromium, zirconium, cerium, lanthanum, scandium, yttrium, or the like to provide corrosion resistance of a metal.

As one embodiment, the said barrier layer 300 may have a thickness of 20 µm to 80 µm. When the thickness of the said barrier layer is less than 20 µm, pinholes, fine cracks, and the like may occur in a process such as molding, making it difficult to ensure safety, and when the thickness or the said barrier layer is more than 80 µm, the energy density may be lowered in the production of a battery.

In one exemplary embodiment, the total thickness of the said cell pouch film may be, for example, 60 to 185 µm. In an example, the said cell pouch film may be at least 153 µm or at most 113 µm.

On the other hand, in the exemplary embodiments of the present invention, there is provided a method for preparing the cell pouch film as described above, the method comprising: surface-treating both-sided surfaces of the metal raw material contained in the barrier layer; drying the said surface-treated metal raw material on both sides; coating the outer surface adhesive layer by applying adhesive to one side surface of the said surface-treated metal raw material, to form the outer surface adhesive layer; and laminating the outer layer raw material to the top of the said outer surface adhesive layer; wherein the drying temperature of the metal raw material after the said surface treatment on both sides is 160° C or higher.

In relation to this, in general, the prior art comprises the steps of: i) coating and drying the surface-treated layer on one side of the metal layer, followed by the first winding step to coat and dry another surface-treated layer on the other one side of the said metal layer, and winding it again secondarily; ii) forming an outer surface adhesive layer on the one side of the said surface-treated metal layer, and laminating and drying the outer layer, and then winding it thirdly; and iii) forming an inner surface adhesive layer on other one side of the said surface-treated metal layer, and laminating and drying the sealant layer. When several processes are repeated in this way, not only does it raise the probability of running losses and process defects, but it may also lead to poor formability.

Therefore, in the exemplary embodiments of the present invention, the conventional film for cell pouch may be manufactured according to a 1Pass 3 Coating (1P3C) method in which three or more coating processes may be performed in one in-line process by one run of the raw material, rather than repeating the order of coating, drying, and winding for each layer stacking process, thereby solving the problems of the prior art as above and improving formability.

In one exemplary embodiment, the said method may comprise primarily laminating nylon and polyethylene terephthalate (PET) films; and laminating the said laminated nylon and polyethylene terephthalate (PET) films with the metal layer, preferably aluminum, as the barrier layer.

In detail, in the general solvent dry lamination (SDL) process, a nylon film is laminated on the barrier layer (usually using aluminum) in a first order, and then a polyethylene terephthalate (PET) film is laminated thereon in a second order. At this time, aluminum, a metal, is laminated with as much tension as possible to counteract the thermal shrinkage of nylon caused by its poor elongation. However, at this time, when the nylon film already stretched becomes a pouch, the resistance to tension is already increased. Consequently, excellent formability may be compromised.

On the other hand, when the 1P3C process is adopted, but the outer layer laminated with the nylon film and the PET film is laminated with the barrier layer (laminated with the nylon film side facing the barrier layer) after pre-lamination of the nylon film and the PET film, formability may be better unlike the above-described process.

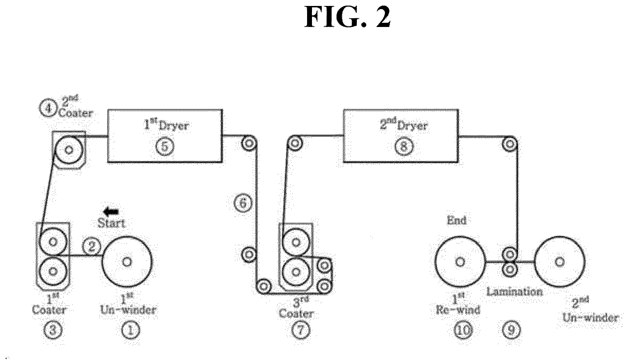

In addition, when the metal raw material is dried after surface treatment on both-sided surfaces of the metal raw material contained in the barrier layer (process 5 of Fig. 2), achieving the drying temperature, that is drying chamber temperature of 160°C or higher may result in better formability.

In a non-limiting example, the said temperature of the drying chamber may be between 160° C and 200°C. In this range, there is no significant difference in the change in the physical property of the produced film.

For example, the said temperature of the drying chamber may be 160°C or higher, 165°C or higher, 170°C or higher, 175°C or higher, 180°C or higher, 185°C or higher, 190°C or higher, 195°C or higher, or 200°C or lower, 195°C or lower, 190°C or lower, 185°C or lower, 180°C or lower, 175°C or lower, 170°C or lower, or 165°C or lower. When the chamber temperature is lower than the said range, the effectiveness of the surface treatment may be particularly deteriorated, and physical properties (outer layer peeling strength, electrolyte resistance, etc.) may be deteriorated after the surface treatment. This tendency may be more remarkable, especially when the temperature is 140°C or less.

In one exemplary embodiment, the said method may comprise laminating with a resin, for example, a polypropylene (PP) resin film, for forming a sealant layer on the opposite side when the said laminated nylon and polyethylene terephthalate (PET) films are laminated with the barrier layer.

In one exemplary embodiment, the said method may comprise a both-sided double coating step in which both sides of a metal layer as barrier layer are surface-treated by first and second coatings; a coating step of applying and drying an adhesive on both-sided surfaces of the said surface-treated metal layer; and a step of laminating a resin film and an outer layer film (nylon and PET lamination film) for forming the sealant layer as described above on both-sided side surface of the metal layer to which the said adhesive is applied and dried.

In one embodiment, the said both-sided surface treatment step may comprise sequentially performing surface treatment on the other side of the said metal raw material without a drying step, immediately after the surface treatment on one side of the metal raw material. In this case, the said both-sided surface treatment step may be performed by a both-sided double coating means comprising a first coater and a second coater.

In one embodiment, the said both-sided surface treatment step may comprise: performing a first coating on one side of the metal raw material by applying the water-based and solvent-based coating solution using a combination of direct coating and reverse kiss coating (RKC) methods, and performing a second coating on the other one side of the metal raw material by applying a coating solution using RKC and Film up/down coating methods.

Specifically, the said first coating is performed by applying the water-based and solvent-based coating solution using a combination of direct coating and reverse kiss coating (RKC) methods by a first coater, so that the physical property and changes of the coating solution may be considered. The other side surface of the metal raw material may be subjected to a secondary coating to apply the coating liquid using RKC and film up/down coating methods. On the other hand, by configuring the substrate contact surface forming the outer layer and the positions of the coating roll and the doctor to be adjustable, it is possible to improve the uniformity of coating and operation speed. More specifically, by configuring a chamber method (sealing pipe) for precise control of the said coating agent, it is possible to adjust the viscosity of the coating agent and effectively prevent the inflow of foreign material.

In one embodiment, the said both-sided surface treatment step may comprise, more specifically, the following processes: a raw material supply process of unwinding the wound metal sheet for supply the raw material; a foreign material removal process of removing foreign material present on the surface of the supplied metal sheet; a tension adjustment process of adjusting the tension of the metal sheet after the foreign material on the surface have been removed; and a both-sided double coating process of performing coating on both sides of the metal raw material while maintaining a constant tension.

In one embodiment, the said foreign material removal process may comprise a first foreign material removal process of performing discharge treatment on both-sided surfaces of the metal raw material to remove oil. In addition, the said foreign matter removal process may further comprise a pinhole inspection process of confirming whether pinholes are generated on both-sided surfaces of the metal raw material from which the oil has been removed. In addition, the said foreign material removal process may further comprise a second foreign material removal process of removing foreign material generated on both-sided surfaces of the metal raw material subjected to the said pinhole inspection process by a roll manner.

In addition, the said method according to one embodiment may further comprise a physical property stabilization drying step of drying the metal raw material having both-sided surfaces surface-treated in a floating manner to stabilize physical properties between the both-sided surface treatment step and the outer surface adhesive layer coating step. In accordance with the said floating manner, both-sided surfaces of the surface-treated metal raw material may be dried simultaneously, minimizing contact between the guide roll and the raw material, so that issues such as occurrence of poor running performance of the appearance due to foreign matter transfer by the guide roller and cutting of the raw material may be significantly reduced.

In one embodiment, the said drying step in the said method is to stabilize the physical property, and may be to dry the metal raw material surface-treated on both sides in a floating manner. In other words, an air floating manner may be applied to dry the surface-treated raw material on both sides in a non-contact manner while floating. As a result, it is possible to dry the both-sided coated metal raw material while minimizing contact with the components such as a transfer roll. Then, it may further comprise a cooling step of cooling the dried metal raw material, and a surface inspection step of inspecting the surface of the cooled metal raw material.

In one embodiment, the step of coating the outer surface adhesive layer by applying an adhesive to one side of the said surface-treated metal raw material to form the outer side adhesive layer, respectively, is a process of applying the adhesive to the one side of the surface-treated metal raw material through coating twice, and may be performed by a third coater, and is prepared for laminating through a process such as drying. After applying the adhesive, the metal raw material applied with the adhesive is dried to form an adhesive layer, and then the thickness of the dried adhesive layer is measured, and the surface of the adhesive layer may be subjected to corona treatment to strengthen the adhesive force.

In one embodiment, the said method may further comprise, after the said laminating step, forming an inner surface adhesive layer on the other one side where the outer layer is not laminated in the said metal raw material. In addition, in one embodiment, it may further comprise a drying step after the said step of forming the inner surface adhesive layer. In one embodiment, it may further comprise laminating the sealant layer raw material to the bottom of the said inner surface adhesive layer.

In one embodiment, the said method may comprise up to a total of two winding steps until the final structure of the cell pouch is prepared, to prevent cutting and/or pressing on the raw material used in each step up to the outer layer laminating step.

Specifically, it is most preferable to prepare the final structure of the cell pouch film by winding twice or less in total, and more preferably once in total (i.e., single winding).

In one embodiment, the said winding step may be performed after the said outer layer lamination step. Alternatively, it may be performed after the said sealant layer lamination step. For example, the said winding step may be performed in step 10 of Fig. 2.

In one embodiment, the laminating the outer layer raw material to the top of the said outer surface adhesive layer, and the laminating of the sealant layer raw material to the bottom of the said inner surface adhesive layers are respectively a process of laminating a functional raw material to one side of the metal raw material applied with the adhesive, and the inner side may be primarily laminated with the sealant layer raw material to stabilize the heat resistance and cold resistance of the battery, while the outer side may be laminated with the outer layer raw material for heat resistance, pinhole resistance, wear resistance, and so on. In one embodiment, each of the lamination steps may be laminating the pre-prepared outer layer raw material or sealant raw material.

In one embodiment, between the said third coating step and the lamination step, it may further comprise: an adhesive drying step of drying the metal raw material applied with the adhesive to form the adhesive layer; an adhesive layer thickness measurement step of measuring the thickness of the dried adhesive layer; and surface treatment step for the adhesive layer of corona treating the surface of the said adhesive layer to strengthen the adhesive force.

In one embodiment, it may further comprise a surface inspection step of inspecting the surfaces of the said sealant layer and outer layer after the said lamination step.

In one embodiment, in order to minimize the occurrence of foreign material and scratches in the process of transferring each raw material, both a tendency structure that operates by separating the substrate contact roll and the axis, and a shaft structure that moves in one piece may be applied to the guide roll. The general driving method of the guide roll involves transmitting the rotation from the motor to the axial-integrated guide roll, driving it at a 1:1 speed ratio, while the tendency driving method has a structure that separates the guide roll and axial to mutually compensate for the rotational speed of the fine rolls, and may be applied to necessary sections. As one example, a Re-winder portion and an Un-winder portion (a raw material supply portion) may be separately configured so that they may be operated separately when a problem occurs in facility operation.

In addition, in one embodiment, a suction roll may be applied to the tension control section to minimize the generation of foreign material and scratches during the transfer of the raw material, and a contact-type clean roll for removing foreign material may be applied to prevent foreign material generated during the running from sticking to the roll and causing poor appearance (such as cutting and scratching).

Meanwhile, exemplary embodiments of the present invention may further comprise an aging step. The aging step is a process necessary to improve reliability such as adhesion, electrolyte resistance, and peel strength during preparation of the cell pouch, but an optimum aging process due to a somewhat long required time is important. From the viewpoint of productivity, it is preferable to prepare a product through only one aging step for the said cell pouch final structure. Specifically, the said method may comprise up to two aging steps. More specifically, the said method may comprise applying an adhesive to one side of the surface-treated metal raw material without an aging step after the said both-sided surface treatment step, and the said aging step may be included after the lamination step of the outer layer and/or the sealant layer. For example, when the aging step is included in the both-sided surface treatment step before the said lamination step, the unlaminated surface treatment agent may be detached while the film in the preparing intermediate step is exposed to air for a certain period of time. For example, when the aging step is included in the adhesive layer formation step, the reaction of the adhesive layers may proceed in part, resulting in a blocking phenomenon in which the adhesive layer adheres to another layer.

Meanwhile, exemplary embodiments of the present invention provide a film manufacturing apparatus for the said cell pouch, comprising: a both-sided surface treatment means comprising a first coater 3 and a second coater 4 for surface-treating both-sided surfaces of a metal raw material forming the barrier layer; a third coater 7 for applying an adhesive to one side surface of the said surface-treated metal raw material; and a laminating portion 9 for laminating a functional raw material on one side of the said adhesive layer. Fig. 2 is a schematic view of a film manufacturing apparatus for the cell pouch according to one example of the present disclosure.

In one embodiment, the said both-sided surface treatment means may comprise a raw material supply portion 1, a foreign material removal means 2, a tension control portion, and the first coater 3 and the second coater 4. The said raw material supply portion 1 supplies raw material by unwinding the wound metal raw material. The said foreign matter removal means 2 removes the foreign material present on the surface of the supplied metal raw material. The said tension control portion adjusts the tension of the metal raw material from which foreign material has been removed on the surface. The first coater 3 and the second coater 4 perform coating on both sides of the metal raw material while maintaining a constant tension.

In one embodiment, the said foreign material removal means 2 may comprise the first foreign material removal portion that performs discharge treatment on both-sided surfaces of the metal raw material to remove oil. In addition, it may further comprise the pinhole inspection portion that confirms whether pinholes are generated on both-sided surfaces of the metal raw material from which the oil has been removed. When there is no abnormality in the confirmation result, it may further comprise the second foreign material removal portion that removes foreign material generated on both-sided surfaces of the metal raw material in a roll manner.

In one embodiment, the physical property stabilization drying portion 5 may be formed between the said both-sided surface treatment means and the third coater 7 to stabilize physical property by drying the metal raw material coating-treated on both-sided surfaces in a floating manner. In this case, the air floating manner may be applied to dry the coated substrate in the non-contact manner while floating. As a result, it is possible to dry the both-sided coated metal raw material while minimizing contact with the components such as a transfer roll. Then, the metal raw material dried by the cooling portion 6 may be cooled, and the surface of the cooled metal raw material may be inspected by the surface inspection portion.

In one embodiment, between the said third coater 7 and the lamination portion 9, it may further comprise: an adhesive drying portion 8 for drying the metal raw material applied with the adhesive to form an adhesive layer; an adhesive layer measuring portion for measuring the thickness of the dried adhesive layer, and an adhesion layer surface treatment portion for treating the surface of the adhesive layer with a corona treatment to strengthen the adhesive force.

In one embodiment, it may further comprise the lamination portion 9, followed by the surface inspection portion for inspecting the surfaces of the sealant layer and the outer layer.

According to one embodiment, the film for the cell pouch may be prepared using the manufacturing apparatus of Fig. 2. In one example, a fourth coater (not shown) applying the adhesive to the other side of the surface-treated metal raw material, a drying portion (not shown), a functional raw material (outer layer, sealant layer) lamination portion (not shown), an extrusion portion (including co-extrusion) (not shown), and the like may be added between the lamination portion 9 and the final winding portion (End, 2nd Re-wind) of Fig. 2 as necessary.

Meanwhile, exemplary embodiments of the present invention provide a secondary battery packaged with the cell pouch film as described above. These secondary batteries may be representatively lithium secondary batteries, and in particular, may be the medium to large-sized secondary batteries such as electric vehicles (EVs) and energy storage devices (ESSs).

In addition, exemplary embodiments of the present invention provide a method of preparing the secondary battery, the method comprising packaging the secondary battery with the cell pouch film as described above.

Illustrative embodiments of the present invention are described in more detail through the following examples. The examples disclosed in the present specification are illustrated for the purpose of explanation only, and the examples of the present invention may be implemented in various forms and should not be construed as being limited to the examples described in the present specification.

### [Experimental Method]

### <Preparation of Examples and Comparative Examples>

The pouch films of the examples and comparative examples are those stacked with an outer layer, a barrier layer, and a sealant layer, the lamination film of the outermost polyethylene terephthalate (PET) film (12 µm in thickness) and their inner nylon (Ny) film (25 µm thickness) being used as the outer layer, the aluminum (60 µm in thickness) being used as the barrier layer, and polypropylene layer (80 µm) being used as the sealant layer. The total thickness is 183 µm with adhesive layer thickness.

Examples and Comparative Examples are prepared in the same manner, except that the method of bonding the outer layer in the pouch film is changed as follows, and the drying chamber temperature in the drying process (5 in Fig. 2) after the both-sided surface treatment is changed respectively as shown in table 1 below.

First, in the comparative pouch film, the outer layer is laminated with the metal layer by a solvent dry lamination (SDL) method. Specifically, after coating the surface treatment agent on both sides of the aluminum layer, which is the metal layer, nylon is laminated initially as the outer layer, followed by a secondary lamination of PET thereon. After the surface treatment, the drying temperature is 140 °C or more and 150 °C or less. After that, the polypropylene (PP) layer, which is the inner layer (sealant layer), is extruded to prepare the pouch film. In this process, nylon is laminated onto the sturdy metal, aluminum, with maximum tension applied to prevent nylon from thermal shrinkage, as nylon can easily shrink when exposed to heat.

On the other hand, in the example pouch film, the already laminated nylon film and PET film are laminated onto aluminum in a single step (with the nylon film laminated facing the aluminum), and then the polypropylene (PP) layer, which is the inner layer (sealant layer), is extruded and laminated on the opposite side. After the surface treatment, the drying temperature is at least 160° C.

**[Table 1]**

| Temperature of the drying chamber in the drying process (5 in FIG.2) after the both-sided treatment | | surface | | | | | | | | |
|---|---|---|---|---|---|---|---|---|---|---|
| item | Ex. 1 | Ex. 2 | Ex. 3 | Ex. 4 | Ex. 5 | Ex. 6 | Ex. 7 | Ex. 8 | Comp . Ex. 1 | Comp . Ex. 2 |
| drying process(5 in Fig.2) chamber temperatur e | 160 °C | 165 °C | 170 °C | 175 °C | 162 °C | 167 °C | 173 °C | 172 °C | 150°C | 145°C |

Each pouch film was manufactured in 240 mm (MD) × 266 mm (TD).

In Examples and Comparative Examples, the peeled surface roughness of peeled layer side and barrier layer side, the residual thickness of the aluminum in the edge portion, and the maximum molding depth for evaluating formability are evaluated as follows.

### <Performance of Peeling>

A 2.5 cm (TD)×15 cm (MD) pouch film is impregnated into the container containing the electrolyte and sealed, and then the sealed container is left in the oven at 85° C for 1 day, and then the pouch film impregnated into that electrolyte is taken out and cut into size of 1.5 cm (TD)× 15 cm (MD) to prepare a sample.

Weak cuts are made only on the outer layer without damage to the barrier layer, then it is pulled with the universal testing machine (UTM) to peel off the metal layer and part of the peeled sealant layer, then that sample is flatly attached to a slide glass using both-sided tape, and again used the universal testing machine (UTM) to peel off the sample by holding both ends of that sample so that the metal layer and the peeled sealant layer are at 180 degrees and pulling them to peel off by about 30 mm or more (50 mm/min in speed).

### <Measurement of Surface Roughness>

The metal layer (aluminum layer) side of the peeled sealant layer is cut to a size of 1×1 cm2 and attached flat to the slide glass using both-sided tape.

Photographs of the surface curvature are taken using a surface roughness measurement device (NV-2200 3D profiler, manufactured by Nano System). Ra in the histogram column is measured for the obtained data using an analysis program (NanoMap, manufactured by Nano system)..

### <Measurement of Elastic Modulus of Outer Layer (Nylon/PET)>

The cell pouch film is manufactured in 150 mm × 1.5 mm using a specimen cutter (manufactured 2 MD and TD specimens), then peeled Ny/PET from the pouch by hand. The elastic modulus is then evaluated with a universal testing machine UTM. The conditions for evaluating the elastic modulus include a speed of 50 mm/min, a grip gap of 50mm, and the evaluation is conducted at a room temperature of 25° C and a humidity of 30%. The evaluation of elastic modulus is obtained by using the slope of the elastic modulus section in the SS curve.

### <Measurement of Formability and Residual Thickness of Aluminum in Edge Portion after Molding>

The formability and residual thickness of the aluminum in the edge portion for the cell pouch film sized at 240 mm (MD)×266 mm (TD) are evaluated using a one-cup molding machine coated with chromium (Cr).

The results of the molding are measured 10 times to evaluate the maximum molding depth of the pouch that is completely molded without cracks in all 10 times. The pressure during molding is fixed at 0.3 MPa, and the R value (the radius value of corner curvature) of the molding machine is 4R (4 mm). The forming size during molding is 90 mm×120 mm in width and is performed by single forming.

The residual thickness of aluminum in the edge portion after molding is evaluated by cutting the edge portion with the cross-sectional cutter after molding 12 mm, evaluating the cross-section of the aluminum in the pouch film through SEM, and then measuring the thickness of the aluminum (maximum thickness, residual thickness after molding). The reason for measuring the residual thickness of aluminum (post-molding thickness) in the edge portion of the pouch film is because the residual thickness of the barrier layer after molding has the greatest influence on formability.

The results of evaluating the peeled surface roughness Ra (unit: µm), outer layer elastic modulus (nylon/PET elastic modulus) (unit: N/mm²), residual thickness (unit: µm) of aluminum in the edge portion, and formability (unit: mm) of the pouch films of Examples and Comparative Examples are shown in tables 2 to 5, respectively.

**[Table 2]**

| | Ex. 1 | Ex. 2 | Ex. 3 | Ex. 4 | Ex. 5 | Ex. 6 | Ex. 7 | Ex. 8 | Comp. Ex. 1 | Comp. Ex. 2 |
|---|---|---|---|---|---|---|---|---|---|---|
| peeled surface roughness Ra on the side of the barrier layer | 0.83 | 0.85 | 0.88 | 0.94 | 0.82 | 1.13 | 0.97 | 1.04 | 1.98 | 2.34 |

**[Table 3]**

| | | Ex. 1 | Ex. 2 | Ex. 3 | Ex. 4 | Ex. 5 | Ex. 6 | Ex. 7 | Ex. 8 | Comp. Ex. 1 | Comp. Ex. 2 |
|---|---|---|---|---|---|---|---|---|---|---|---|
| elastic modulus | MD | 2304 | 2315 | 2420 | 2287 | 2349 | 2294 | 2425 | 2358 | 2594 | 2630 |
| | TD | 2126 | 2194 | 2333 | 2216 | 2277 | 2199 | 2399 | 2312 | 2414 | 2434 |

**[Table 4]**

| item | Ex. 1 | Ex. 2 | Ex. 3 | Ex. 4 | Ex. 5 | Ex. 6 | Ex. 7 | Ex. 8 | Comp. Ex. 1 | Comp. Ex. 2 |
|---|---|---|---|---|---|---|---|---|---|---|
| maximum thickness | 37.5 | 35.8 | 37.2 | 36.5 | 35.2 | 34.6 | 37.1 | 35.5 | 33.1 | 33.7 |

**[Table 5]**

| item | Ex. 1 | Ex. 2 | Ex. 3 | Ex. 4 | Ex. 5 | Ex. 6 | Ex. 7 | Ex. 8 | Comp. Ex. 1 | Comp. Ex. 2 |
|---|---|---|---|---|---|---|---|---|---|---|
| formability | 18.5 | 17.0 | 18.0 | 17.0 | 17.5 | 17.0 | 17.5 | 17.0 | 13.5 | 14.0 |

As can be seen from the above, unlike the comparative example in which the peeled surface roughness Ra on the side of the barrier layer after peeling off the outer layer and the barrier layer, the examples with the surface roughness Ra of 1.5 µm or less have a large residual thickness of aluminum in the edge portion after molding and significantly excellent in formability.

In addition, in the examples where the elastic modulus in the MD direction of the outer layer obtained by laminating nylon and PET is 2450 N/mm² or less and where the elastic modulus in the TD direction of the outer layer obtainable by laminating nylon and PET is 2400 N/mm² or less, it can be seen that the residual thickness of aluminum at the edge portion after molding is large and the formability is greatly excellent.

Although the non-limiting and exemplary embodiments of the present invention have been described above, the technical spirit of the invention is not limited to the accompanying drawings or the above description. It will be apparent to those skilled in the art that various forms of modifications may be made without departing from the technical spirit of the present invention, and such forms of modification shall fall within the scope of the claims of the invention.

## Claims

1. A cell pouch film, wherein:
at least an outer layer, a barrier layer, and a sealant layer are structured in that order, and
a peeled surface on the side of the barrier layer after peeling between the outer layer and the barrier layer of the cell pouch film has a surface roughness Ra of 1.5 µm or less.

2. A cell pouch film, wherein:
at least an outer layer, a barrier layer, and a sealant layer are structured in that order, and
an elastic modulus in the MD direction of the outer layer laminated with nylon and polyethylene terephthalate (PET) is 2450 N/mm² or less, and the elastic modulus in the TD direction is 2400 N/mm² or less.

3. The cell pouch film according to claim 1 or 2, wherein:
the barrier layer has a pre-molding thickness of 60 µm, and
an edge portion metal layer of the cell pouch film has a residual thickness of 34 µm or more as measured by a Measurement of Residual Thickness of Edge Portion Metal Layer, wherein in said Measurement of Residual Thickness of Edge Portion Metal Layer a cell pouch film of 240 mm (MD)×266 mm (TD) is molded through a molding machine to have 12 mm depth, and the edge portion is cut with a cross-sectional cutting machine to measure the maximum thickness of the cross-section of the metal layer in the cell pouch film through SEM.

4. The cell pouch film according to any one of claims 1 to 3, wherein the cell pouch film has a maximum molding depth of 16 mm or more as measured by a Measurement of Formability, wherein in said Measurement of Formability a cell pouch film is manufactured in 240 mm (MD) × 266 mm (TD) specimens and the formability is measured using a molding machine and the formability are evaluated by measuring the maximum (max) molding depth of the pouches formed without cracks in all 10 times out of 10 times of measurement.

5. A method for preparing the cell pouch film according to any one of claims 1 to 4, the method comprising:
surface-treating both-sided surfaces of the metal raw material contained in the barrier layer;
drying the surface-treated metal raw material on both sides;
coating the outer surface adhesive layer by applying adhesive to one side surface of the surface-treated metal raw material, to form the outer surface adhesive layer; and
laminating the outer layer raw material to the top of the outer surface adhesive layer;
wherein the drying temperature of the metal raw material after the surface treatment on both sides is 160° C or higher.

6. The method according to claim 5, the method further comprising:
laminating nylon and polyethylene terephthalate (PET) films, and then laminating the laminated nylon and polyethylene terephthalate (PET) films with the barrier layer.

7. The method according to claim 5 or 6, wherein the both-sided surface treatment step comprises sequentially performing surface treatment on the other side of the metal raw material without the drying step, immediately after the surface treatment on the one side of the metal raw material.

8. The method according to any one of claims 5 to 7, wherein the drying step is **characterized by** drying the metal raw material of which both sides are surface-treated in a floating manner.

9. The method according to any one of claims 5 to 8, wherein the both-sided surface treatment step comprises:
performing a first coating on one side of the metal raw material by applying the water-based and solvent-based coating solution using a combination of Direct coating and Reverse Kiss Coating (RKC) methods, and
performing a second coating on the other one side of the metal raw material by applying a coating solution using RKC and Film up/down coating methods.

10. The method according to any one of claims 5 to 9, the method comprising:
performing the first winding after the outer layer lamination step;
forming an inner surface adhesive layer on the other one side where the outer layer is not laminated in the surface-treated metal raw material after the first winding; and
laminating a sealant layer raw material to the bottom of the inner surface adhesive layer; and
performing the second winding after the sealant layer raw material lamination.

11. A secondary battery, **characterized by** being packaged with the cell pouch film according to any one of claims 1 to 4.

12. A method for preparing a secondary battery, comprising:
packaging the secondary battery with the cell pouch film according to any one of claims 1 to 4.
